# EUROPEAN PATENT SPECIFICATION

(11) **EP 4 321 955 B1**
(45) Date of publication and mention of the grant of the patent: **02.04.2025**
(21) Application number: 22189982.6
(22) Date of filing: 11.08.2022
(51) Int. Cl.: G05D 1/00, G05D 1/242, G05D 1/245, G05D 1/667, G05D 105/28, G05D 107/70, G05D 109/10, G05D 111/10, G05D 111/50

(54) **CONTROL OF AN AUTOMATED GUIDED VEHICLE WITH FORKLIFT CAPABILITIES**
STEUERUNG EINES FAHRERLOSEN TRANSPORTFAHRZEUGS MIT GABELSTAPLERFUNKTIONEN
COMMANDE D'UN VÉHICULE À GUIDAGE AUTOMATIQUE AVEC DES CAPACITÉS DE CHARIOT ÉLÉVATEUR À FOURCHE

(43) Date of publication of application: 14.02.2024
(73) Proprietor: Mobile Industrial Robots A/S, 5260 Odense S (DK)
(72) Inventor: AHLER, Christian T, 5260 Odense S (DK); NIELSEN, Frederik Tøt, 5260 Odense S (DK); JØRGENSEN, Troels Bo, 5220 Odense SØ (DK)
(74) Representative: Patentgruppen A/S

(56) References cited:
- EP-A1- 3 729 345
- DE-A1- 102020 006 337
- US-A- 5 068 791

## Description

### Field of the invention

The invention relates to a method of controlling an automated guided vehicle comprising a fork and an automated guided vehicle comprising a fork.

### Background of the invention

In the art it is known from EP3729345 to control a vehicle to engage with and disengage from a pallet. The positioning of the vehicle prior to penetrating the pallet with the fork is made based on a baseline geometric representation of a face of the pallet. This baseline geometry representation is established by sensor data as well as automated guided vehicle localization data. It may be determined that the updated geometric representation deviates from the baseline geometric representation by more than a threshold value and, in response, motion of the vehicle may be adjusted.

The control method disclosed in EP3729345 is sensible to errors in the localization data and the suggested control method would not recognize a situation where the pallet is pushed against a wall or other infrastructure/objects, and/or situation where a drive wheel of the AGV is slipping. In the art, US5068791 is also found. This document disclose a wire guidance system for a materials handling vehicle detecting an alternating signal carried by a buried wire. Sensors are used to determine how the vehicle is located relative to the wire by a microcomputer.

### Summary of the invention

The inventors have identified the above-mentioned problems and challenges related to navigation of an automated guided vehicle to avoid pushing or dragging the pallet and solved these problems by the present invention as described below.

In an aspect, the invention relates to a method of monitoring the navigating an automated guided vehicle in an object handling mode of operation, said automated guided vehicle comprises a fork, a primary sensor, a secondary sensor and a controller controlling movement of said automated guided vehicle, the method comprise the steps of:
- monitoring movement of said automated guided vehicle operated in a normal mode between a first position and a second position,
- monitoring movement of said automated guided vehicle operated in said object handling mode between said second position and a target position,
wherein the method is characterized in that said monitoring in said object handling mode includes:
- establishing a change of distance between said automated guided vehicle and said object in a time period between two points in time, based on distance measurements obtained by said primary sensor,
- measuring a representation of distance travelled by said automated guided vehicle during said time period by said secondary sensor,
- comparing said established change of distance and said measured representation of distance and based on the comparing result determine if correction of the motion of said automated guided vehicle is needed.

This method of monitoring the movement of an automated guided vehicle is advantageous in that it is based on two different and specific travel distance monitoring techniques. Further, the method of monitoring is advantageous in that it can be implemented by existing sensors where the primary sensor is dependent of the object to be handled by the automated guided vehicle and the secondary sensor is independent of the object to be handled by the automated guided vehicle.

By using two different measuring techniques where at least one is dependent of the object to be handled, errors in handling the object such as pushing the object against a wall and slipping wheels of the automated guided vehicle can be detected and thus subsequently accounted for in the control of movement of the automated guided vehicle.

Further, the present invention is advantageous in that it can be used both in a docking and in an undocking mode. In a docking mode, where the automated guided vehicle is approaching an object such as a pallet located at a target position, there is a risk that the pallet is pushed by the fork of the automated guided vehicle. In an undocking mode, when an object such as a pallet is positioned at its target position and is to be picked up by the automated guided vehicle, there is a risk that the pallet is being dragged while the automated guided vehicle moves away from the pallet. Both situations can be detected and subsequently compensated for in the control of the automated guided vehicle with existing sensors of the automated guided vehicle according to the present invention.

Automated guided vehicle should be understood as any automated vehicle or robot that is above to navigate autonomous i.e. an interaction between predetermined map information and objects sensed from the surrounding of the automated guided vehicle. Hence, such automated guided vehicles are also sometimes referred to as autonomous mobile robots, self-driving and semiautomated forklifts.

The first position may be understood as a position from where the automated guided vehicle starts its travel towards the second position. The first position could e.g. be a position where the automated guided vehicle changes direction of motion (e.g. change from moving with fork behind to moving with fork in front), a way point, a start position, etc.

The second position may be understood as a position where the automated guided vehicle changes direction of motion in front of a target position where an object such as e.g. a pallet is to be dropped off or picked up.

Alternatively, if the direction of motion does not change, the second position may be the point where the automated guided vehicle is aligned with the target position, i.e. when no further adjustment of the direction of motion is needed for the automated guided vehicle to arrive at a predetermined target position.

The target position should be understood as the location at which an object is to be picked up or dropped off. The exact coordinates of the target position may not be known in advance, hence the target position may be "at the end of a row of objects", the first object in a planned row, between objects / obstacles, etc. So that the automated guided vehicle is controlled towards the target position in a normal mode of operation and when approaching the target position, it is positioning correct according to the target position.

The positioning according to the target position is referred to as docking mode, i.e. the docking mode refers to the situation where the automated guided vehicle is approaching the target position (with or without an object / load carried by the fork). When, on the other hand, the automated guided vehicle is moving away from the target position (with or without an object / load carried by the fork) this is referred to as undocking mode of operation.

Normal mode of operation should be understood as a mode of operation in which the automated guided vehicle is controlled based on a navigation system e.g. including a map of an area. Such map may define positions or coordinates where obstacles are located, areas where the automated guided vehicle cannot enter, etc. In the normal mode of operation, a front sensor (e.g. a Lidar) is used in combination with the map for the controller to determine the position / coordinates of the automated guided vehicle on the map.

Object handling mode of operation is only used close to a target position of an object to be dropped off or picked up by the automated guided vehicle. In other words, the object handling mode may include a docking mode and an undocking mode where docking mode refers to the positioning of the automated guided vehicle to the target position and the moving hereof towards the target position. The undocking mode on the contrary refers to the moving of the automated guided vehicle away from the target position i.e. when an object is dropped off or picked up. "Close" should be understood as closer than e.g. 2 meters of the target position. In the object handling mode, the movement of the automated guided vehicle is solely monitored (and controlled) by the sensors according to the present invention. Thus, no navigation system and map are needed to drop off or pick up an object according to the present invention.

The established change of distance is a distance travelled by the automated guided vehicle during a time period. The primary sensor measures the distance from the sensor to the object at the start of the time period and at the end of the time period and the controller subtracts these two measurements resulting in the established change of distance. The time periods may not need to be successive, but could be selected as every 2, 3, 4, etc. sample from the distance measurements of the primary sensor.

The measure representation of distance is used to determine a distance moved by the automated guided vehicle during a time period. The measured representation may be a direct measurement of the distance performed by the secondary sensor, or it may be input from a secondary sensor that need to be processed to determine the actual distance moved by the automated guided vehicle. It should be noted that the second sensor may also be used as reference to determine if the automated guided vehicle is moving i.e. if e.g. one or more wheels are slipping.

The measured representation of distance is measured continuously as the automated guided vehicle is moving or when the wheel(s) of the automated guided vehicle are turning (if wheels are slipping, the expected distance is not measured). Accordingly, additional calculations may be needed to establish the measured distance, but line of sight between the secondary sensor and the object is not needed to establish the travelled distance as is the case with primary sensor.

The successive points in time may be the start and end times defining the time period in which the travelled distance is established.

In an exemplary embodiment of the invention, said object handling mode comprise a docking mode of operation and / or and undocking mode of operation.

As mentioned, the object handling mode of operation may include both a docking mode and an undocking mode of operation. The monitoring and control of the positioning of the automated guided vehicle may be similar in the docking and undocking mode.

The object handling mode may also include the control of the raising and lowering of the fork. Thus, when the automated guided vehicle is docked correctly at the handling position where the object is to be picked up or dropped off, the fork may be lifted or lowered. Subsequently, the automated guided vehicle is undocking i.e. moving away from the handling position with or without the object.

Throughout this document, the invention will mainly be described with reference to the docking mode of operation keeping the above-mentioned similarities between docking and undocking mode in mind.

Thus, the docking mode of operation is understood as a control mode where the automated guided vehicle, without an object, is controlled towards an object to be lifted / relocated e.g. by lifting that object. The docking mode may also include the control mode where the automated guided vehicle, with an object, is controlled towards a target position where the object is to be positioned e.g. by lowering the object to it is positioned e.g. on the floor.

The undocking mode is understood as a control mode where the automated guided vehicle, with an object, is controlled away from the position where the automated guided vehicle engaged with the object such as lifted the object by the fork. The undocking mode may also include the control mode where the automated guided vehicle, without an object, is controlled to move away from a position where an object has been positioned.

The position of the object (where it is dropped-off or picked-up) may be referred to as a handling position. Hence, the handling position should be understood as the position of the automated guided vehicle when it is controlled to lift or lower its fork.

It should be mentioned that an object may be referred to as a target object or load in this document.

In an exemplary embodiment of the invention, the correction of the motion of said automated guided vehicle is required if said comparing result is a difference between said established change of distance and said measured representation of distance travelled greater than a maximum threshold value.

In an exemplary embodiment of the invention, the control of said automated guided vehicle during said object handling mode is controlled according to a first threshold value and a second threshold value.

In an exemplary embodiment of the invention, said established change of distance is established based on direct distance measurements made between said primary sensor and said object.

The lidar / primary sensor is preferably positioned at the automated guided vehicle between the two tines and above a single tine, if the automated guided vehicle only comprises one tine. This position is advantageous in that the measured distance is the direct distance which do not need any processing before being used.

In an exemplary embodiment of the invention, said scanning Lidar sensor furthermore measures a first corner distance and a second corner distance of said object located at said target position.

Measuring the distance to corners of an object located at the target position several time during the time when the automated guided vehicle approaches the object is advantageous. This is because comparing these distances indicates whether the automated guided vehicle is approaching perpendicular to the object or adjustments are needed to approach perpendicular.

In an exemplary embodiment of the invention, said automated guided vehicle in addition to said primary sensor comprises a laser distance sensor.

This is advantageous in that e.g. a scanning Lidar sensor may not provide valid distance measurements at distances less than e.g. 30cm. Hence, to ensure the ability to establish correct distance between the automated guided vehicle when the distance therebetween is less than e.g. 30cm a laser distance sensor may be used.

In an exemplary embodiment of the invention, said secondary sensor is measuring distance travelled by a wheel of said automated guided vehicle.

Measuring distance travelled by a wheel is advantageous in that it has the effect that the measured distance is independent of the object at the target position and thus if this object moves. Accordingly, based on the measurement from the secondary sensor and from the primary sensor, it is possible to determine if the automated guided vehicle is pushing the object. It should be mentioned that the measurement representing distance may need to be converted to an actual distance before it can be used in any control and comparison. In this document, a reference to measured distance may be a reference to a distance derived from measurements representing distance or direct measured distance.

In an exemplary embodiment of the invention, said automated guided vehicle includes two secondary sensors.

Implemented a secondary sensor at two or more of the wheels of the automated guided vehicle is advantageous in that the measured distance can be compared. Hence, if one secondary sensor measures a longer distance than the other, the controller knows that the automated guided vehicle is turning, i.e. not moving in a straight line.

In an exemplary embodiment of the invention, the distance travelled by said automated guided vehicle is furthermore measured by a tertiary sensor.

A tertiary sensor may e.g. be an inertial measurement unit mounted on the automated guided vehicle which is able to calculate a force, angular velocity and direction of movement of the automated guided vehicle. The inertial measurement unit may comprise a Gyroscope, Magnetometer and Accelerometer.

The inertial measurement unit is able to measure distance travelled or a representation hereof that can be converted to distance travelled. Further, the inertial measurement unit can measure direction of the travelled distance. Both measurements are independent of line of sight to the object in fact it may be completely independent of the object. Accordingly, by using an inertial measurement unit together with e.g. the primary and / or the secondary sensor, it is possible to determine if an object is pushed by the automated guided vehicle or if wheels of the automated guided vehicle are slipping.

Further it should be mentioned that the inertial measuring unit may be used to verify the distance established or measured by the secondary sensor. This is advantageous e.g. in the situation where a wheel slip. In this situation, the secondary sensor may indicate a certain movement whereas the measurement of e.g. an inertial measuring unit, e.g. based on measurement of acceleration, may indicate less or no movement.

In an exemplary embodiment of the invention, said method further comprises the step of stopping said automated guided vehicle if said direct distance does not change while said measured distance changes.

In the situation where the distance measured by the secondary sensor changes, while the direct distance measured be the scanning Lidar sensor does not change, the movement of the automated guided vehicle may stop in that this may indicated that the object is pushed or dragged.

In an exemplary embodiment of the invention, said method further comprises the step of adjusting one or more control parameters of said automated guided vehicle if said direct distance does not change while said measured distance change.

Adjusting a control parameter may lead to a change in direction of movement of the automated guided vehicle, a change in hight of the fork(s), etc.

The method according to paragraphs [0005]-[0048] and [0050]-[0051] is implemented in an apparatus according to paragraph [0052].

In an aspect, the invention relates to a method of controlling an automated guided vehicle according to any of the above paragraphs in a normal mode of operation followed by an object handling mode operation which is followed by said normal mode of operation, said automated guided vehicle comprise a fork, a primary sensor, a front sensor, a secondary sensor, a data storage and a controller controlling movement of said automated guided vehicle, wherein said method comprise the steps of:
- during a first time period, controlling movement of said automated guided vehicle in said normal mode of operation, wherein said normal mode of operation includes navigating said automated guided vehicle based on at least a digital representation of the area in which said automated guided vehicle is to move and input from said front sensor,
- during a second time period, which is shorter than said first time period, controlling movement of said automated guided vehicle in said object handling mode of operation, wherein said object handling mode of operation includes navigating said automated guided vehicle based on at least input from said primary sensor and input from said secondary sensor,
- during a third time period, which is longer than said second time period, controlling movement of said automated guided vehicle in said normal mode of operation, wherein said normal mode of operation includes navigating said automated guided vehicle based on at least a digital representation of the area in which said automated guided vehicle is to move and input from said front sensor.

Controlling or navigating an automated guided vehicle in both a normal mode and an object handling mode of operation during subsequent time periods is advantageous in that accuracy is in focus and increased when necessary. Further, overall improvements to an autonomous systems including an object handling automated guided vehicle is achieved. Such improvements are reduced wear and damage of objects due to the high accuracy in operation of the automated guided vehicle. Further, the number of errors requiring manual interaction such as dragging or ushing an object is reduced is reduced which is very advantageous in that this is a very time-consuming error in autonomous systems. automated guided vehicle

In an aspect, the invention relates to an automated guided vehicle comprises a fork, a primary sensor, a secondary sensor and a controller controlling movement of said automated guided vehicle in a normal mode of operation and in an object handling mode of operation according to the method specified in any of the above paragraphs,
wherein the automated guided vehicle is characterized in that when operated in said object handling mode of operation,
   - said primary sensor is configured for establishing a change of distance between said automated guided vehicle in a time period between two points in time,
   - said secondary sensor is configured for measuring a representation of distance travelled by said automated guided vehicle during said time period,
   - said controller is configured to comparing said established change of distance and said measured distance and based on a comparing result determine if correction of the motion of said automated guided vehicle is needed, and
wherein said controller is configure for controlling movement of said automated guided vehicle in said object handling mode of operation according to said comparing result.

### The drawings

For a more complete understanding of this disclosure, reference is now made to the following brief description, taken in connection with the accompanying drawings and detailed description, wherein like reference numerals represent like parts. The drawings illustrate embodiment of the invention and elements of different drawings can be combined within the scope of the invention:
- Fig. 1a: illustrates an automated guided vehicle approaching an object located at a target position according to an embodiment of the invention,
- Fig. 1b: illustrates a side view of an automated guided vehicle according to an embodiment to of the invention,
- Fig. 1c: illustrates a back view of an automated guided vehicle according to an embodiment to of the invention,
- Fig. 1d: illustrates an alternative automated guided vehicle in a side view,
- Fig. 2: illustrates the moving of an automated guided vehicle picking up a load,
- Fig. 3: illustrates the approaching of an automated guided vehicle to a load, and
- Fig. 4: illustrates a flow chart of the control of an automated guided vehicle picking up a load.

### Detailed description

The present invention is described in view of exemplary embodiments only intended to illustrate the principles and implementation of the present invention. The skilled person will be able to provide several embodiments within the scope of the claims.

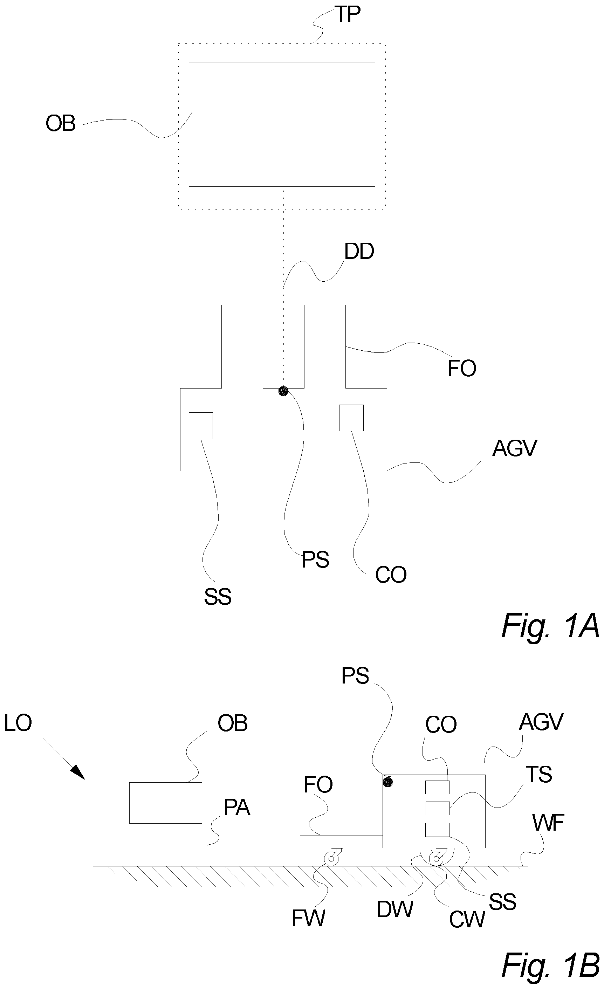

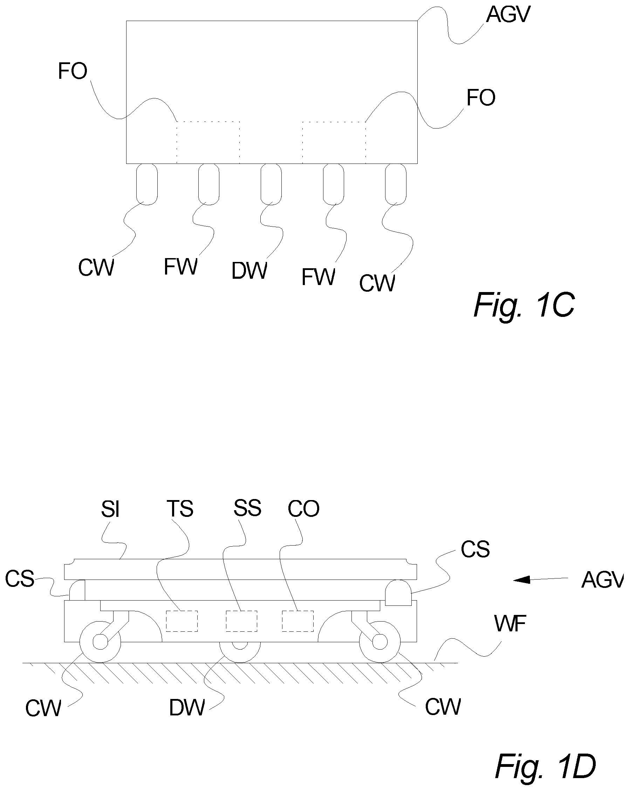

Fig. 1A-C illustrates schematically one example of an automated guided vehicle AGV according to the present invention. Fig. 1d illustrates a second example of an automated guided vehicle AGV according to the present invention. The automated guided vehicle AGV is also referred to simply as AGV in this document. Fig. 1a illustrates the AGV and an object OB to be picked up by the AGV in a top view. Fig. 1b illustrates the AGV and object OB in a side view and Fig. 1c illustrates the AGV from the back.

The AGV illustrated in fig. 1A comprises a fork FO thereby making the AGV suitable for lifting pallets PA carrying a load LO which together may be referred to as an object OB or target object. The object OB is illustrated as positioned on a target position TP. In fig. 1A, the position of the object OB coincides with the target position TP which in this embodiment, is larger than the object OB. The actual position of the object OB may not be known by the controller in advance and only determined by the controller CO with reference to the location of the AGV and e.g. also based on sensor input from the surroundings of the AGV. Hence, by the known location of the AGV and e.g. also knowledge of the dimensions of the object (load and pallet), the controller CO is able to determine and record the actual position of the object OB at least when the engagement between fork FO and pallet PA is established.

It should be mentioned that when referring to an AGV with a fork, a reference is made to an AGV comprising one or more tines / prongs making the AGV suitable for lifting objects such as a pallet e.g. carrying a load or a pipe around which a load may be wrapped.

The illustrated AGV comprises a controller CO which is controlling the movement of the AGV. The movement include driving the AGV forward and backwards relative to the fork FO, turning the AGV clockwise and counter clockwise, lifting the fork FO, stopping the AGV, regulating speed of movement, etc. The control is made based on control software stored in a data storage associated with the controller i.e. part of or communicating with the controller CO and sensor input. The controller CO is further controlling the movement according to different operation modes. The controlled may be a standard programmable logic controller or a dedicated AGV controller specifically designed for its purpose. As known by the skilled person, the controller may in addition to the data storage also communicate with / comprise communication interface, position determining equipment such as global position system and other element needed for safely navigating the AGV.

The controller may, during normal operation allow the AGV to travel at a speed of e.g. 2m/s and in docking/undocking mode at one or more reduced travel speeds. One example of such reduced travel speed could be 0.3m/s. The speed and when to allow which speed may be determined e.g. by distanced to load so that the slowest speed is when the fork is closest to the load. In this way speed control can be provided based on distances to the load.

The control software may include a map of an area in which the AGV is to move. The map may include position of obstacles, allowed /non-allowed areas, target positions, start positions, corridors, etc. It should be mentioned that the map may be a virtual map that only comprises coordinates of map elements such as the above-mentioned obstacles, positions and obstacles.

The sensor input may be provided by a range of sensors. Most important with respect to the present invention is the so-called primary sensor PS and secondary sensor SS. But also, a tertiary sensor and additional sensors may provide relevant input.

The primary sensor PS is also referred to as a back sensor in that it is positioned opposite the direction of movement of the AGV when controlled according to a normal mode of operation. The primary sensor PS is typically of the distance sensor type and may be implemented as a scanning Lidar sensor which is an example of a commonly sensor type used for AGVs. Alternative, the primary sensor PS may be implemented as laser distance sensors.

Hence, from the primary sensor PS a change of distance between the AGV and the object OB during a time period can be established. A characteristic of the primary sensor PS is that it is dependent on a reflecting object for being able to measure a distance. The AGV may also comprise a front sensor also implemented as e.g. a scanning Lidar sensor. Thus, from the back and front sensors the controller may establish a digital representation of the surroundings of the AGV and thereby be able to locate itself and objects OB in the digital representation. In fig. 1a the dotted line between the primary sensor PS and the object OB indicates that it is the direct distance DD between the AGV and object OB that is measured.

The second sensor SS is typically of a motion sensor type from which position over timed can be measured or derived. The secondary sensor SS may be implemented as an odometry sensor measuring distance travelled or a representation of distance travelled during a time period. A characteristics of the secondary sensor SS is that it is independent of objects for being able to perform measurements of the distance travelled by the AGV.

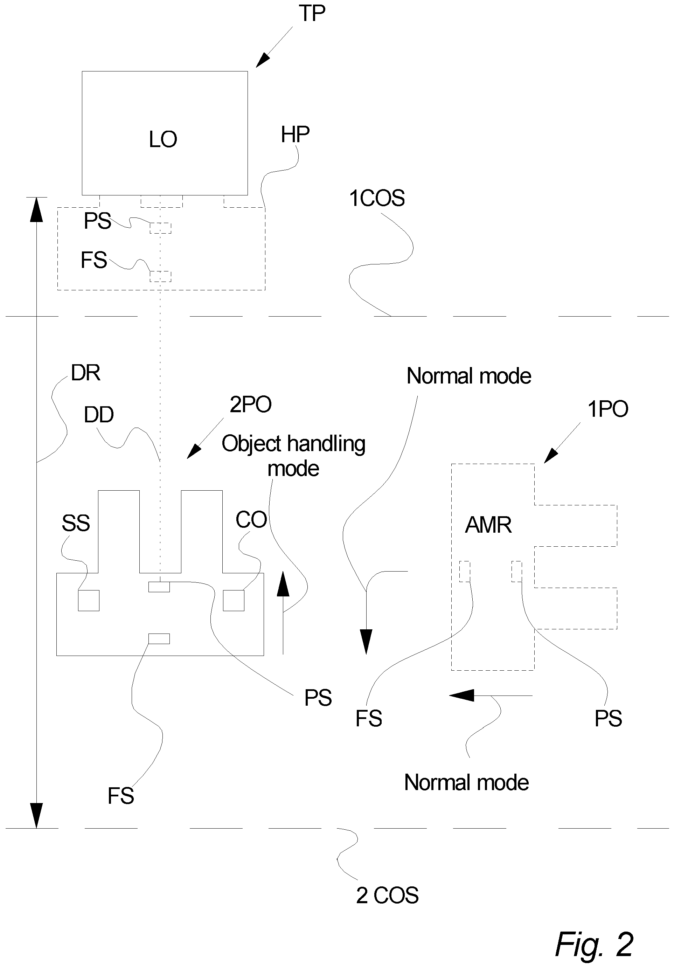

The tertiary sensor TS (not illustrated in fig. 1a-d) may be implemented as an inertia measuring unit IMU using e.g. accelerometer and gyroscope to determine characteristics of movement of the AGV and distanced travelled by the AGV. Additional sensors may also be used. Such additional sensors may be of the type mentioned above or other types. An example of an additional sensor of an AGV is referred to as a front sensor FS (see fig 2) which is located opposite the fork and used with the AGV is moving in the normal mode of operation. To the category of the additional sensors is also corner sensors CS which are illustrated in fig. 1d. The corner sensors CS may be of the scanning Lidar type as the primary sensor. Further, to the category of additional sensors, also belong angular odometers via which an angle turned by the AGV can be determined.

Fig. 1b illustrates the object OB and AGV of fig. 1A in a side view on a warehouse floor WF. It is noted that the object OB may be positioned on a pallet PA which together is referred to as a load LO. The pallet PA can engage with the with the fork FO of the AGV and in this way be lifted and transported from one position to another position. The illustrated AGV comprise a drive wheel DW, two caster wheel CW and two fork wheel FW. The drive wheel DW is typically positioned under the center of the AGV, whereas the caster wheels are positioned at the center of each of the sides of the AGV. The fork wheels are located as support for the fork when the lift the object OB.

Fig. 1c illustrates the AGV from behind when the AGV is moving towards an object and serves to illustrate the position of the wheels DW, CW, FW of the AGV. In fact, it may be argued that the AGV illustrated in fig. 1c is seen in a front view in that when controlled in normal operation it is typically driving with the fork pointing in the opposite direction of the driving direction. Further note, that the illustrated wheels are of the same size, however it should be mentioned, that typically the drive wheel DW would be larger than the caster and fork wheels CW, FW.

Fig. 1D illustrates an alternative example of an AGV. This particular illustration shows a side view of the AGV located in a flat-floored environment such as a warehouse floor WF.

The AGV comprises a sensory system in the form of two scanning Lidar sensors, placed in opposite corners of the AGV therefore referred to as corner sensors CS. Given the positioning of the corner sensors CS a scan signal is permitted to travel into the robot surroundings from the corner scanners CS, each of the two corner scanners CS are able to scan approximately an angle 270 degrees. The corner scanners CS are thus efficiently able to horizontally cover all 360 degrees around the AGV.

Moreover, three wheels are visible in the illustration one of two drive wheels and two of four corner wheels CW. The AGV may have a total of six wheels, where the visible wheels obstruct the view to the remaining wheels.

Some of the wheels are responsible for steering the robot such as the caster wheels CW positions at the corners of the AGV. Other wheels are referred to as drive wheels DW are associated with one or more odometers, which provides an indication of a distance travelled by the AGV. This is useful for supporting navigation, particularly when there are no obstacles in the surroundings of the AGV which can use for determining its location, e.g., relative to an area map. In other embodiments, the same wheels are used for steering and odometry.

Moreover, the AGV has a support surface SI for receiving items to be transported by the AGV. The support interface SI may be implemented as a fork for lifting e.g. a pallet PA at one of the ends of the AGV (not illustrated). Alternatively, as in the illustrated embodiment on fig. 1d, the AGV may be intended to drive under the object / load for lifting and transporting the load LO which may be positioned on a rack.

The AGV further comprises a robot control system which may include a controller CO and a safety controller (not illustrated). In additional the AGV may include sensor systems such as the mentioned odometer, inertia measuring unit, etc. illustrated as secondary and tertiary sensors SS, TS. These elements are integrated internally in the AGV, indicated by dashed rectangles in the illustration.

The robot control system may control establishment of planned robot routes, sub routes, maneuvering the AGV (via the wheels), and execution of a Monte Carlo localization algorithm for determining the location of the AGV in the physical environment including various obstacles. The safety controller provides safety functionalities, such as emergency braking for avoiding collisions with people and obstacles.

The robot control system and the sensory system including the above-mentioned sensors are communicatively connected, such that measurements performed by the scanning Lidar sensor can be provided to the control system, such that these measurements can be processed. The input to the control system from the sensors of the sensory system can thus serve as basis for manoeuvring and localizing the AGV.

Optionally, the control system further provides a AGV state indicative of current operational status of the AGV. For example, a first possible state is indicative of normal operation of the AGV and a second state is indicative of restricted movability of the AGV.

Fig. 2 illustrates an embodiment of the invention where the AGV is controlled in a normal mode during a first part of a distance between a first position 1PO and a target position TP. More specific, this first part (illustrated by two arrows) is between the first position 1PO and a second position 2PO where the first position is illustrated as a dotted AGV and the second position is illustrated as a solid AGV. Further, the AGV is controlled in an object handling mode during a second part of the distance between the first position 1PO and the target position TP. More specific in the embodiment illustrated in fig. 2, this second part (illustrated by on arrow) is between the second position 2PO and the target position TP. The target position TP is in this illustration coincident with the position of the object OB. As the AGV is approaching the object in this embodiment, this part of the object handling mode may also be referred to as docking mode. Note that positions in this document may also be referred to as way points.

The object handling mode of operation includes docking (approaching target position with or without load), handling (lifting or lowering fork and thereby load) and undocking (moving away from target position with or without load). When not operated in the object handling mode, the AGV is operated in the normal mode of operation.

It should be mentioned that the actual position of the AGV when it has reached the target position TP and is ready to lift or lower the fork, may be referred to as the handling position. Typically, the automated guided vehicle will not move in the handling position. However, as it approaches the target position TP it may start lifting / lowering the fork before the AGV reach stand still in the handling position. The reason for such control strategy could be to reduce handling time i.e. the time the AGV is in the object handling mode.

The first position 1PO may in principle be any start position of or a location on a route of the AGV to a target position TP. It could be a charging station, where the AGV has positioned a load LO, shift of zone or area, shift from driving in one corridor to another, etc. Note that a corridor is illustrated defined by a first corridor side 1COS and a second corridor side 2COS. These sides may be defined e.g. by the front of a row of objects or obstacles which may be stationer such as a wall.

In contrary to the first position 1PO, the second position 2PO is rather well defined in that the second position 2PO is "in front" of the object OB to be picked up. Hence, the AGV is positioned at the second position 2PO when the fork FO is pointing towards the object OB and only minor (preferably no) adjustments are needed to navigate the fork FO into the pallet pockets. Ideally, the path to travel by the AGV from the second position 2PO towards the target position TP is perpendicular to the front of the object / pallet. Accordingly, the second position 2PO can be any distance "in front" of the object OB. Typically this distance is limited by the width of a corridor or similar obstacles. Hence, the second position 2PO may be selected as a distance in a range DR of distances between the object OB and an opposite corridor side (here the second corridor side 2COS), corridor width, opposite obstacle, etc.

The location of the second position 2PO may be predetermined i.e. coordinates of the first object OB in a row of objects may be specified by the control software or by a work person communicating with the AGV via a user interface. The second position 2PO may alternatively be determined by the last object OB in a row of objects. Hence if the controller CO know that it has positioned five objects OB or this information is provided from a AGV fleet controller, then by knowledge of the size of the object and coordinates of the row, the controller CO may calculate the location of the target position and thereby the location of the second position 2PO. Alternative, the coordinates of a target position TP may be provided to the controller CO from a fleet controller. This is true for both the docking and undocking modes. The controller CO may receive information of dimensions of the object to be picked up and where to pick up (target position) and when it approaches, the scanning input from the scanning Lidar sensor may be used to confirm that the correct object is located at the target position.

The normal mode of operation is as described above based on input from the sensor systems i.e. whichever available of e.g. primary sensor PS such as a back sensor, secondary sensor SS such as an odometer, tertiary sensor TS such as an inertia measuring unit, front sensor FS and corner sensors CS. Input from the sensor system is by the controller CO used together with area map information / information of permanent obstacles and / or information from a fleet controller to navigate the AGV.

Once the AGV is located in a distance of the distance range DR to the target position, the control mode change to object handling mode if the AGV is approaching the object OB the object handling mode is a docking mode and the object handling mode is undocking mode if the AGV is moving away from the object OB.

It should be noted that once the AGV is in the second position 2PO, the scanning Lidar PS may scan the object OB / pallet PA to identify the pallet pockets and thus the route to follow for an optimal engagement between fork FO of the AGV and the object OB / pallet PA. Once pallet position and pose are identified, the controller CO may only use the scanning Lidar sensor to establish the direct distance DD.

Accordingly, a situation may occur where the scanning Lidar sensor is not able to scan the load complete when the AGV is approaching it and thus identification of e.g. the pallets position, its pockets, pose, geometry, engagement areas, etc. may be identified when the AGV is in the second position or indirectly as it is approaching. Load characteristics may thus be identified from stored data such as width and length, the load may comprise a marker based on which the AGV is able to identify load characteristics and location, object characteristics and location e.g. on a pallet, if pallet is an integrated part of the object (e.g. beverage container, fish container, etc.) and the like.

The illustrated AGV do not carry an object OB but is about to approach the object OB to pick-up the object OB, thus the controller CO changes mode of operation from the normal mode of operation to the docking mode of the object handling mode.

In the object handling mode of operation, it is assumed that there are no obstacles between the AGV and the object OB. This is reasonable to assume in that at least one of the front scanner FS, primary scanner PS or corner scanner CS was scanning the areas between the AGV and the object OB as the AGV was turned and located at a position in the second position range DR.

Thus, in the docking mode (and similarly in the undocking mode), the AGV is now controlled based on input from the primary sensor PS and the secondary sensor SS.

As mentioned, the primary sensor PS may also be referred to as the back sensor and implemented as a scanning Lidar sensor measuring the direct distance DD between the object OB and the AGV. In this way, the distance between the object OB and the AGV is measured with a sample frequency of e.g. less than one second. Hence, the change of distance between the AGV and the object OB can be established from measurement of the direct distance DD made at two different points in time.

It should be noted that the sample frequency / scanning speed is fast enough compared to the speed with which the AGV moves to ensure that the AGV does not collide with obstacles identified by the scanner.

As mentioned, the secondary sensor SS may be of an odometer type measuring distance travelled by the wheel to which it is associated. Hence, independent of the object OB, the controller CO, based on input form the secondary sensor, is able to determine the distance travelled by the AGV between two different points in time.

When the two different points in time are the same, the controller CO is able to compare the distances (the established and the measured) and thus monitor if the AGV is moving towards the object OB as expected. If this for some reason is not the case, the controller CO is able to react by adapting or adjusting control of the AGV.

Adjustment of control such as turning, stopping and reversing the AGV may be needed if the monitoring reveals a difference in the distance from the two different distance measuring methods. Hence, if wheels of the AGV are slipping the odometer measurements would suggest that the AGV moves, but if there are not change in the direct distance measured by the primary sensor it is indicated that wheels are slipping. Such situation may occur e.g. if the object is pushed against an obstacle, wall or other infrastructure. Further, dragging the object OB when undocking e.g. if the fork is not lowered enough to disengage from the pallet PA may also be indicated by the above-described method.

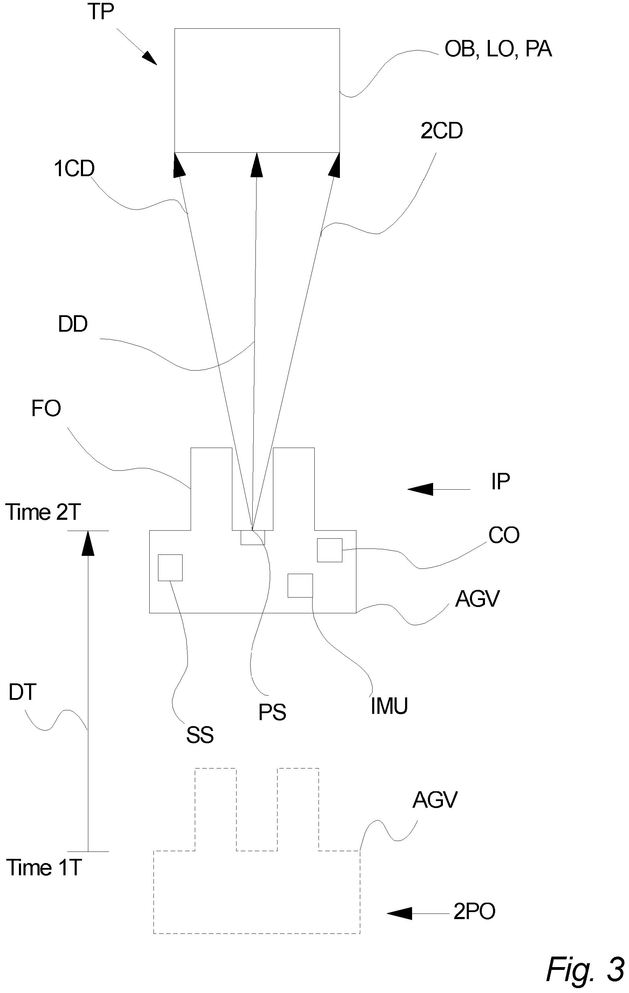

Fig. 3 illustrates an embodiment of the invention where the AGV further comprises a tertiary sensor in the form of an inertia measuring unit IMU. Further, as illustrated, the scanning Lidar sensor PS also measures distances to the corners of the object OB.

The inertia measuring unit IMU may also be used to determine if the drive wheel(s) DW of the AGV is slipping. Hence, without the direct distance DD slip may be difficult to determine with existing sensors of the AGV. The inertia measuring unit IMU may at least include a gyro and an accelerometer, hence if there is no indication of acceleration or smaller acceleration than expected from the inertia measuring unit IMU and there is indication of a travelled distance from the odometer, then there is a high risk of slip or pushing the object OB / pallet PA. Accordingly, input from the odometer and from the inertia measuring unit IMU may be used to determine if wheels are slipping or if object is pushed.

In the situation where mismatch between input from odometer and inertia measuring unit IMU is detected, the controller CO may control the motion of the AGV to an opposite direction and maybe try to adjust the direction of movement to see if the fork is better positioned in the pallet pockets and thus not pushing the pallet.

The scanning Lidar sensor PS may in addition to the direct distance DD also monitor the distance to the corner(s) of the object 1CD, 2CD. Monitoring these corner distances 1CD, 2CD can be used to adjust the motion of the AGV so that its fork reach the pallet pockets without hitting the pallet or object and thereby damage the load LO. Hence, if not the two corner distances 1CD, 2CD are equal, this indicates that the AGV is not moving in a straight line (perpendicular) towards the object OB and thus that the movement should be adjusted to reach such straight line. If the distances sensed by the primary sensor PS indicate that the tip of the fork is about to enter the pallet pockets and the primary sensor PS at this points registers an increasing difference between the corner distances 1 CD and 2 CD, this indicates that the pallet is pushed by one prone of the fork and that the movement should be adjusted or stopped. Possibly the AGV should drive backward again, towards the second position to end in a new docking position (a new second position), and make an additional attempt to approach and engage with the pallet, considering the registered changed pose of the pallet. Preferably the AGV moves perpendicular towards the object OB. When the object OB is located on a pallet PA, perpendicular should be understood as approximately perpendicular in that the pallet pockets are a couple of centimetres such as 2-3 centimetres wider than the width of the fork.

Fig. 3 further illustrates the position of the AGV at a first time 1T (with dashed line, second position) and at a second time 2T (IP intermediate position). This is to illustrate the distance travelled DT by the AGV between the two periods of time, which is established from two distance measurements made by the scanning Lidar sensor PS and measured by the odometer.

As mentioned above, the control of the AGV in the undocking mode is more or less the same as the control of the AGV in the docking mode. Obviously, when docking i.e. approaching a target position then, when an object is located at the target position, the object can be used to establish a direct distance. When there is no object, the positioning of the object OB may be determined with reference to neighbouring objects in the row or stationary obstacles, coordinates, etc. When undocking i.e. moving away from the target position (with or without an object), the AGV may be controlled based on distance to object if such is present or neighbouring objects, obstacles, coordinates, etc. if no object is present at the target position.

Slip of wheels and dragging of object may be monitored in the same way as described above with reference to the docking mode of operation.

Accordingly, the main object in the undocking mode is to ensure that the load is not dragged after the AGV. One way of terminating the undocking mode is to measure the distance travelled by the AGV. When this distance is the same or longer than the length of the fork with a fixed distance between load and AGV, it can be concluded, that the load is not dragged after the AGV. Hence, control mode can be changed.

The docking mode of operation may start when the AGV is in the second position 2PO with its fork facing the target position and is ready to move with its fork towards the target position TP. The docking mode may stop when the AGV reach the handling position HP i.e. where the fork is lifted to engage with the object OB or lowered to position the object OB.

The undocking mode of operation may start when the AGV is moving from the handling position HP and back towards the second position 2PO i.e. when either an object is dropped off by lowering the fork or picked up by raising the fork.. When the second position 2PO is reached or when the distance of movement away from the object OB is longer than the fork, the undocking mode of operation can be terminated.

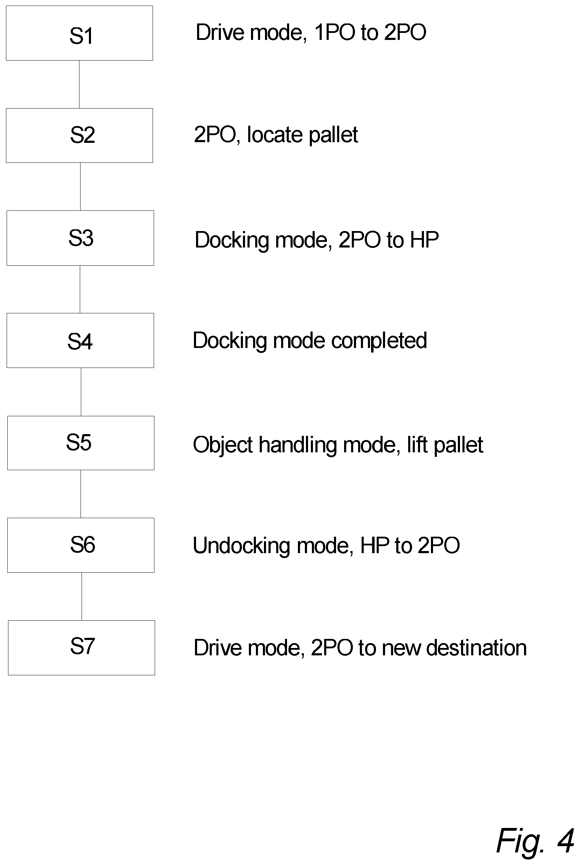

Based on the above description, the control of the AGV can in an embodiment, follow the flow chart illustrated in fig. 4. In fig. 4, the AGV is to pick up a load and in step S1 it is controlled in normal mode of operation from the first position 1PO to the second position 2PO. This control includes a 90 degree turn as illustrated on fig. 2.

In step S2, the AGV is in the second position i.e. with the fork of the AGV facing / pointing to the load. The load is scanned for engagement positions, identifiers which may be used to provide information of the load such as of the pallet and / or object, etc.

In step S3, the docking mode is started and the AGV is moving towards the handling position where it is to pick-up the load. An encoder such as a wire encoder is used during this step in that the Lidar scanner may be momentarily blind or at least may not be able to see the entire load as the AGV is approaching the load. During the docking mode, the scanner may be used to determine distance to the load, an encoder measuring rotation of wheels and a pallet detector may be used to control movement of the AGV.

In step S4, the AGV reach the handling position with a distance to the object / pallet of e.g. 2 centimetres and the movement of the AGV is stopped i.e. the docking mode is completed.

In step S5, the fork is lifted and thereby the load is lifted.

In step S6, the AGV enters undocking mode and leaves the handling position and is moved towards the second position. During this mode of operation, the movement of the AGV receives input from the wheel / motor encoder.

In step S7, the AGV reaches the second position i.e. a position in the range DR where it is safe to turn and subsequently move along the corridor towards the destination of the load which the AGV is now carrying. When turned, the movement of the AGV is controlled according to the normal mode of operation.

The steps of the control of the AGV are following the principles described in relation to fig. 4, when the AGV is approaching a target position with a load to be unloaded.

As mentioned, the controller CO is controlling the movement of the AGV in a control cycle from a start position to a target position. The start position (first position) may be a coordinate defining a physical location which can be derived from an area map. The start position may be a location of an object OB in a row of objects, a charging station or the like. Hence, the control cycle may start far away from the target position TP. Thus, during a first time period the AGV may be controlled according to a normal mode of operation characterized in that the control during this first time period is based on an area map and input from at least a front sensor FS (e.g. a scanning Lidar sensor) The first time period may be relatively long, typically longer than 5 minutes.

The controller CO may receive information of the location of the target position e.g. from an external controller such as a fleet controller, from a work person via a user interface, from a continuous control routine repeated over and over again, etc.

When the location of the AGV is within a radius of e.g. less than two meters from the coordinates of the target position TP, the controller CO change mode of operation to an object handling mode of operation. More specifically to a docking mode because the AGV is approaching the target position TP.

During the object handling mode of operation, the controller CO may control the AGV solely based on sensor input. Compared to the first time period, this second time period in which the AGV is controlled according to the object handling mode is shorter. The duration of the second time period is less than five minutes.

The sensor input is provided at least from one primary sensor PS (back sensor such as a scanning Lidar sensor) and one secondary sensor SS (odometer sensor). This means that the AGV may be controlled with no reference to its surroundings (except from maybe the object OB to be picked up). Hence, no areas map, scanning of the object and its surroundings, etc. are necessary to control the AGV.

It should be mentioned, that scanning of the AGV surroundings, and the object OB surroundings may be needed for safety reasons alone.

When the object OB is being lifted by the AGV or positioned by the AGV and moves away from the target position (undocking mode) a third time period may begin during which the controller CO again controls the AGV according to the normal mode of operation. During this third time period, which is longer than the second time period, the AGV is moving the object OB to a new target position or moving to a new target position to pick-up a new object OB. As mentioned above, the control according to the normal mode of operation is based on an areas map and sensor input.

The final part of the distance travelled by the AGV from the second position 2PO to the object OB thus controlled in the docking mode of operation may solely be controlled based on the input from the odometer. Thus e.g. the last 0,5m it is assumed, that no obstacles can come between the object OB and the AGV and thus, these last 0,5m the AGV is controlled solely based on the odometer input and when the 0,5m distance has been reached. One reason for only controlling according to the odometer is that the measurements provided by the scanning Lidar sensor may be precise on such short distances. Hence in this embodiment, especially during the last part of the distance to the object OB, the inertia measuring unit IMU may be used to determine if slip or pushing the object OB occurs.

Alternatively, one or more laser distance sensor may be used as input instead of or in addition to the scanning Lidar sensor. In this way, the odometer input may be assisted by input from another sensor type if needed.

The AGV may move with at speed in the range of 1.5m/s, however when approaching the object, e.g. the last 0,5m, the speed may be reduced further.

It is mentioned that established distance and measured distance from the two sensor systems should be the same. Obviously, it should be mentioned that these distances should be substantially the same i.e. within e.g. a few centimetres such as below 0,1m or 0,05m.

Further, as mentioned above slip, pushing or pulling may be detected and in some situations also allowed. The distance allowed to push or pull the object may vary. If e.g. the pallet PA is wrapped, the fork need to break through the wrap before arriving in the optimal engaging position. The AGV may push the object OB until breakthrough of the wrap by the fork occur. Pushing the pallet PA in this situation may be allowed up to e.g. 0,05m. The breakthrough may be detected e.g. by comparing odometer measured distance and acceleration input form the inertia measuring unit. Once the fork has braked through the wrap, the AGV may not be allowed to push the pallet PA more than a few centimetres such as up to 0,02m.

Note that lengths and times provided in this document are only examples which may be changed from application to application e.g. due to size of object OB, AGV, areas of warehouse floor WF, etc.

In an exemplary embodiment of the invention, said target position is defined by the actual position of said object.

Accordingly, a target position may be the desired or expected position of an object (to be picked up or dropped off), but on the warehouse floor, the object may not be positioned exactly on the expected target position such as on predetermined coordinates. Hence, the target position and the actually position of the object may be slightly different.

The target position may thus be determined relative to the handling position of the automated guided vehicle when the fork hereof is fully engaged or disengaged with the object.

"Slightly different" should be understood as within a few centimetres such as with 10 centimetres from the target position. The difference may e.g. be introduced by pallet pockets which are wider than the tines of the fork, errors in sensor feedback and processing, etc.

Finally, it should be mentioned that the target position may be defined e.g. as an area that is wider than the circumference of the object, that is similar to the circumference of the object, as a centre position of the object or the like.

In an exemplary embodiment of the invention, said correction of motion is performed by said controller

Accordingly, according to the present invention, when the monitoring of the operation of the automated guided vehicle i.e. the monitored distance change / travelled distance representation reveals a correction of the motion is required, such correction can be made still according to the present invention by the controller. A needed correction may be indicated if a difference between distance measurements / representations are above a threshold i.e. the control reacts on difference in distance measurements.

**In** an exemplary embodiment of the invention, said maximum threshold value is below 0,3m, preferably below 0,2m, most preferably below 0,1m.

The maximum threshold value defines the maximum length the automated guided vehicle is allowed to push or drag an object before stopping motion of the automated guided vehicle towards or from the object. Typically, less than 30cm is allowable, but it may deviate from application to applications and may thus sometimes be both larger or smaller than 30cm.

In an exemplary embodiment of the invention, said maximum threshold value is a total threshold value being the sum of a first threshold value and a second threshold value.

In an exemplary embodiment of the invention where the first threshold value is below 0,2m, preferably below 0,1m, most preferably below 0,05m.

In an exemplary embodiment of the invention, the second threshold value is below 0,1m, preferably below 0,05m, most preferably below 0,02m.

Having two threshold values in control of the automated guided vehicle (which together may form a maximum threshold) is advantageous in that this allows the automated guided vehicle to continue operation in various situations where pushing or dragging the object is allowable.

Such situations include pushing the object (such as a pallet) while at the same time moving the fork closer and closer to the correct engagement position. Pushing the pallet in this situation for e.g. 10cm may be allowable whereas when the correct engagement position is reached, it may only be allowable to push the pallet e.g. 2cm.

This particular situation may be determined by the controller e.g. based on comparison of input from the primary and secondary sensors, e.g. if the direct distance measured by the primary sensor decreases, but not at the expected rate in light of input from the secondary sensor. A timer may be started when the reduction in the direct distance deviates from the expected and after e.g. 5 seconds with continuous deviation, the controller may stop motion of the automated guided vehicle.

Another example of such situation is breaking through wrap wrapped around the pallet. The pallet may be pushed a distance corresponding to the first threshold value while trying to penetrate the wrap. Once penetrated the pallet may only be pushed a distance corresponding to the second threshold value.

This particular situation may be determined by the controller e.g. based on comparison of input from the primary and secondary sensors. The situation may be detected if the direct distance measured by the primary sensor does not decrease while the input from the secondary sensor indicate movement. A timer may be started when this situation occurs and after e.g. 5 seconds with no decrease in the direct distance, the controller may stop motion of the automated guided vehicle. When the fork penetrate the wrap, the direct distance may again be as expected based on the input from the secondary sensor.

In an exemplary embodiment of the invention the movement of said automated guided vehicle is stopped if said established change of distance is below a direct docking threshold value.

A direct docking threshold may specify the distance between the primary sensor and the object when the automated guided vehicle is in the correct engaging position. The direct docking threshold value may be between 0,01m and 0,3m depending on where on the automated guided vehicle, the primary sensor is located.

It should be mentioned, that for this particular closeup measurement, an alternative sensor e.g. a laser distance sensor may be used for a more precise distance measurement than the primary sensor may provide.

In an exemplary embodiment of the invention, said primary sensor is a Lidar sensor.

The primary sensor is sometimes referred to as a back sensor in that it is located at the rear part of the automated guided vehicle when this is driving in its normal direction (opposite direction of fork(s)). A Lidar sensor is advantageous in that it is fast (e.g. scanning with a frequency of 100Hz) and the measurements are accurate (e.g. having an accuracy less than 10 millimetres).

In an exemplary embodiment of the invention, said primary sensor is a scanning Lidar sensor, scanning an area in front of said fork.

When used in monitoring and control of the automated guided vehicle in the object handling mode, the object positioned at the target position is within reach of the scanning areas of a scanning Lidar sensor.

In an exemplary embodiment of the invention, said primary sensor is implemented as one or more laser distance sensors

One or more rotating or fixed laser distance sensors may be used as an alternative to one scanning Lidar sensor.

In an exemplary embodiment of the invention, said secondary sensor is a rotary encoder.

A rotary encoder is advantageous in that it is able to convert an angular position or motion of the wheel or motor axle to an analog or digital output signal. A rotary encoder may be an electro-mechanical device that can also be referred to as an odometer.

It should be mentioned that the secondary sensor may also be implemented as other types of sensors such as a camera, 3D camera, laser distiance sencor, ultrasound distance sensor or any other type of known electronic distance sensors the skilled in the art may find suitable, all may be independent of the object.

In an exemplary embodiment of the invention, said method further comprises the steps of monitoring motor data, derive an expected travelled distance based on said motor data and comparing said established travelled distance with the actual measured distance measured by said secondary sensor.

The controller has access to a data storage where e.g. knowledge of expected power consumption per travelled distance is stored. Hence, based on this information the controller may estimate a travelled distance based on the power consumption of the motor. If this expected travelled distance does not match the distance measured by the secondary sensor / input from the secondary sensor, this indicates a wheel is slipping and thus that change in control actions are needed. This way of monitoring and evaluating motor data and measured distance can of course in theory be made to both / all wheels of the automated guided vehicle.

It should be noted, that in addition to monitoring motor data other internal data / operation parameters may be monitored such as various temperature sensors, encoders, accelerometer, gyroscopes, magnetometer, compass, Global Position System, camera, etc.

In an exemplary embodiment of the invention, said method further comprises the step of measuring a first corner distance and a measured second corner distance of said object.

If the two measured corner distances are the same, it indicates that the automated guided vehicle is approaching / engaging the object in a straight line. If the two measured corner distances are below a corner docking threshold, the controller stop movement of the automated guided vehicle in that the fork(s) are expected to be engaged / positioned correct to lift the object.

+In an exemplary embodiment of the invention, said method further comprises the step of stopping movement of said automated guided vehicle if one of a measured first corner distance or a measured second corner distance does not change while at the same time movement of the automated guided vehicle is indicated by measured distance by at least one of said secondary sensor or inertial measurement unit.

No change of one or both of the corner distances simultaneously with a decrease of the direct distance between automated guided vehicle and the object or measured movement by the secondary sensor or inertial measurement unit indicate that the object is pushed and thus, it may be advantageous to stop movement of the automated guided vehicle.

It should be mentioned that if one or both of the measured corner distances are decreasing, but not at the same rate as the direct distance decreases or as the measured distance by the secondary sensor or inertial measurement unit increase, the movement of the automated guided vehicle towards the object may be continued. This is because it indicates that even though the object such as a pallet is pushed the fork(s) are still increasing the part hereof that engage with the pallet. The controller may in this situation adjust direction of movement a bit so that the decrease of measure corner distance and direct distance decrease / increase of measured distance are coincident.

It is noted, that when referring to "the same rate" or "coincident" measurements of e.g. the scanning Lidar this is not mathematically correct. This is because the distance from the scanning Lidar sensor to the corner of the object and the distance from the scanning Lidar sensor to object (direct distance) / travelled distance of the wheels are not the same.

In an exemplary embodiment of the invention, said method further comprises the step of reversing direction of movement of said automated guided vehicle if one of a measured first corner distance or a measured second corner distance does not change while at the same time movement of the automated guided vehicle is indicated by measured distance by at least one of said secondary sensor or inertial measurement unit.

The controller may abort the docking mode, move the automated guided vehicle away from the object and then initiate a new docking mode as described in this document. Such new docking mode may be initiated with the automated guided vehicle following a slightly change route and / or with a change in hight (up or down) of the fork(s).

In an exemplary embodiment of the invention, said method further comprises the step of stopping movement of said automated guided vehicle if a measured first corner distance and a measured second corner distance does not change at the same rate.

If the measured corner distances are not changing with the same rate / speed, it may indicate that the object is being rotated or twisted and thus stopping movement of the automated guided vehicle.

In an exemplary embodiment of the invention, said object is a pallet

In an exemplary embodiment of the invention, movement of said automated guided vehicle from said second position to said target position is made with said fork towards said target position.

In an exemplary embodiment of the invention, control of movement in the normal mode is made at least partly based on input from a front scanner of said automated guided vehicle.

Navigation should be understood as controlling the movement of the automated guided vehicle. The moving of the automated guided vehicle in the normal mode of operation is typically in a direction opposite the fork(s) that is why the name of the sensor located opposite end of the automated guided vehicle is named front sensor.

In an exemplary embodiment of the invention, the method according to claim 14 is implemented in an apparatus according to claim 15.

In an exemplary embodiment of the invention, the apparatus according to claim 15 is implementing the method specified in any of the claims 1-14.

From the above it is now clear that the invention relates to a method of monitoring and controlling an AGV, when the AGV is approaching or moving away from an object to be picked-up at a target position or dropped off at the target position. The AGV is controlled according to normal control mode both before and after the so-called object handling mode. During the object handling mode, input from two independent sensor types is used to control the AGV. A first sensor type measures distance between the AGV and the object OB at a sample frequency. A travelled distance is established from two of these measurements. A second sensor type is measuring distance travelled by the AGV independent of the surroundings of the AGV.

Further, movement of the AGV during the last part of the distance towards the object / target position is controlled based on input from the second sensor type and if necessary adjusted or stopped based on input from the first sensor type.

As long as the established and measured distances are substantially the same, the controller CO continues to allow the AGV to move forward. However, if e.g. the second sensor type indicate movement, but the first sensor type does not, then an indication of AGV wheel slip or push/drag of the object occurs and control actions are required.

Determining wheel slip and drag/push of an object solely with existing AGV sensors and solely based on distance measurements independent of surroundings is advantageous in that time consuming object handling errors (because of manually remedy is required) and damages to the object can be avoided.

The invention has been exemplified above with the purpose of illustration rather than limitation with reference to specific examples of methods and robot systems. Details such as a specific method and system structures have been provided in order to understand embodiments of the invention. Note that detailed descriptions of well-known systems, devices, circuits, and methods have been omitted so as to not obscure the description of the invention with unnecessary details.

### List

- AGV.: Automated guided vehicle
- FO.: Fork
- SI.: Support Interface
- PS.: Primary sensor
- SS.: Secondary sensor
- TS.: Tertiary sensor
- CO.: Controller
- 1PO.: First position
- 2PO.: Second position
- IP.: Intermediate position
- DR.: Second position range
- TP.: Target position
- HP.: Handling position
- DD.: Direct distance
- DT.: Distance travelled
- OB.: Object
- PA.: Pallet
- LO.: Load
- 1CD.: First corner distance
- 2CD.: Second corner distance
- IMU.: Inertial measurement unit
- DAS.: Data storage
- FS.: Front sensor
- 1T.: First time
- 2P.: Second time
- WF.: Warehouse floor
- 1COS.: First corridor side
- 2COS.: Second corridor side

## Claims

1. A method of monitoring the navigating an automated guided vehicle (AGV) in an object handling mode of operation, said automated guided vehicle (AGV) comprises a fork (FO), a primary sensor (PS), a secondary sensor (SS) and a controller (CO) controlling movement of said automated guided vehicle (AGV), the method comprise the steps of:
• monitoring movement of said automated guided vehicle (AGV) operated in a normal mode between a first position (1PO) and a second position (2PO),
• monitoring movement of said automated guided vehicle (AGV) operated in said object handling mode between said second position (2PO) and a target position (TP),
wherein the method is **characterized in that** said monitoring in said object handling mode includes:
• establishing a change of distance between said automated guided vehicle (AGV) and said object (OB) in a time period between two points in time, based on distance measurements obtained by said primary sensor (PS),
• measuring a representation of distance travelled by said automated guided vehicle (AGV) during said time period by said secondary sensor (SS),
• comparing said established change of distance and said measured representation of distance and based on the comparing result determine if correction of the motion of said automated guided vehicle (AGV) is needed.

2. A method according to claim 1, wherein said object handling mode comprises a docking mode of operation and / or and undocking mode of operation.

3. A method according to any of the preceding claims, wherein correction of the motion of said automated guided vehicle (AGV) is required if said comparing result is a difference between said established change of distance and said measured representation of distance travelled greater than a maximum threshold value.

4. A method according to any of the preceding claims, wherein control of said automated guided vehicle (AGV) during said object handling mode is controlled according to a first threshold value and a second threshold value.

5. A method according to any of the preceding claims, wherein said established change of distance is established based on direct distance (DD) measurements made between said primary sensor (PS) and said object OB.

6. A method according to any of the preceding claims, wherein said scanning Lidar sensor furthermore measures a first corner distance (1CD) and a second corner distance (2CD) of said object (OB) located at said target position (TP).

7. A method according to any of the preceding claims, wherein said automated guided vehicle (AGV) in addition to said primary sensor (PS) comprises a laser distance sensor.

8. A method according to any of the preceding claims, wherein said secondary sensor (SS) is measuring distance travelled by a wheel of said automated guided vehicle (ARM).

9. A method according to any of the preceding claims, wherein said automated guided vehicle (AGV) includes two secondary sensors (SS).

10. A method according to any of the preceding claims, wherein distance travelled by said automated guided vehicle (AGV) is furthermore measured by a tertiary sensor (TS).

11. A method according to any of the preceding claims, wherein said method further comprises the step of stopping said automated guided vehicle (AGV) if said direct distance (DD) does not change while said measured distance changes.

12. A method according to any of the preceding claims, wherein said method further comprise the step of adjusting one or more control parameters of said automated guided vehicle (AGV) if said direct distance (DD) does not change while said measured distance change.

13. The method according to any of the claims 1-12 and claim 14, implemented in an apparatus according to claim 15.

14. A method of controlling an automated guided vehicle (AGV) according to any of the preceding claims, in a normal mode of operation followed by an object handling mode operation which is followed by said normal mode of operation, said automated guided vehicle (AGV) comprises a fork (FO), a primary sensor (PS), a front sensor (FS), a secondary sensor (SS), a data storage (DAS) and a controller (CO) controlling movement of said automated guided vehicle (AGV), wherein said method comprises the steps of:
• during a first time period, controlling movement of said automated guided vehicle (AGV) in said normal mode of operation, wherein said normal mode of operation includes navigating said automated guided vehicle (AGV) based on at least a digital representation of the area in which said automated guided vehicle (AGV) is to move and input from said front sensor (FS),
• during a second time period, which is shorter than said first time period, controlling movement of said automated guided vehicle (ARM) in said object handling mode of operation, wherein said object handling mode of operation includes navigating said automated guided vehicle (AGV) based on at least input from said primary sensor (PS) and input from said secondary sensor (SS),
• during a third time period, which is longer than said second time period, controlling movement of said automated guided vehicle (ARM) in said normal mode of operation, wherein said normal mode of operation includes navigating said automated guided vehicle (AGV) based on at least a digital representation of the area in which said automated guided vehicle (AGV) is to move and input from said front sensor.

15. An automated guided vehicle (AGV) comprises a fork (FO), a primary sensor (PS), a secondary sensor (SS) and a controller (CO) controlling movement of said automated guided vehicle (AGV) in a normal mode of operation and in an object handling mode of operation according to the method specified in any of the preceding claims,
wherein the automated guided vehicle is **characterized in that** when operated in said object handling mode of operation,
• said primary sensor (PS) is configured for establishing a change of distance between said automated guided vehicle (AGV) in a time period between two points in time,
• said secondary sensor (SS) is configured for measuring a representation of distance travelled by said automated guided vehicle (AGV) during said time period,
• said controller (CO) is configured for comparing said established change of distance and said measured distance and based on a comparing result determines if correction of the motion of said automated guided vehicle (AGV) is needed, and
wherein said controller (CO) is configured for controlling movement of said automated guided vehicle in said object handling mode of operation (AGV) according to said comparing result.

## Patentansprüche

1. Verfahren zum Überwachen des Navigierens eines fahrerlosen Transportfahrzeugs (AGV) in einem Objekthandhabungsbetriebsmodus, wobei das fahrerlose Transportfahrzeug (AGV) eine Gabel (FO), einen Primärsensor (PS), einen Sekundärsensor (SS) und eine Steuereinrichtung (CO) umfasst, die eine Bewegung des fahrerlosen Transportfahrzeugs (AGV) steuert, wobei das Verfahren die Schritte umfasst:
• Überwachen der Bewegung des fahrerlosen Transportfahrzeugs (AGV), das in einem normalen Modus betrieben wird, zwischen einer ersten Position (1PO) und einer zweiten Position (2PO),
• Überwachen der Bewegung des fahrerlosen Transportfahrzeugs (AGV), das in einem Objekthandhabungsmodus betrieben wird, zwischen der zweiten Position (2PO) und einer Zielposition (TP),
wobei das Verfahren **dadurch gekennzeichnet ist, dass** das Überwachen in dem Objekthandhabungsmodus einschließt:
• Feststellen einer Änderung einer Entfernung zwischen dem fahrerlosen Transportfahrzeug (AGV) und dem Objekt (OB) in einem Zeitraum zwischen zwei Zeitpunkten, basierend auf Entfernungsmessungen, die durch den Primärsensor (PS) erhalten werden,
• Messen einer Darstellung der Entfernung, die durch das fahrerlose Transportfahrzeug (AGV) während des Zeitraums zurückgelegt wird, durch den Sekundärsensor (SS),
• Vergleichen der festgestellten Änderung der Entfernung und der gemessenen Darstellung der Entfernung und Bestimmen, basierend auf dem Vergleichsergebnis, ob eine Korrektur des Bewegungsablaufs des fahrerlosen Transportfahrzeugs (AGV) erforderlich ist.

2. Verfahren nach Anspruch 1, wobei der Objekthandhabungsmodus einen Andockbetriebsmodus und/oder einen Abdockbetriebsmodus umfasst.

3. Verfahren nach einem der vorstehenden Ansprüche, wobei die Korrektur des Bewegungsablaufs des fahrerlosen Transportfahrzeugs (AGV) erforderlich ist, falls das Vergleichsergebnis eine Differenz zwischen der festgestellten Änderung der Entfernung und der gemessenen Darstellung der zurückgelegten Entfernung ist, die größer als ein maximaler Schwellenwert ist.

4. Verfahren nach einem der vorstehenden Ansprüche, wobei eine Steuerung des fahrerlosen Transportfahrzeugs (AGV) während des Objekthandhabungsmodus gemäß einem ersten Schwellenwert und einem zweiten Schwellenwert gesteuert wird.

5. Verfahren nach einem der vorstehenden Ansprüche, wobei die festgestellte Änderung der Entfernung basierend auf Messungen der direkten Entfernung (DD) festgestellt wird, die zwischen dem Primärsensor (PS) und dem Objekt OB durchgeführt werden.

6. Verfahren nach einem der vorstehenden Ansprüche, wobei der scannende Lidar-Sensor außerdem einen ersten Eckabstand (1CD) und einen zweiten Eckabstand (2CD) des Objekts (OB) misst, das sich an der Zielposition (TP) befindet.

7. Verfahren nach einem der vorstehenden Ansprüche, wobei das fahrerlose Transportfahrzeug (AGV) zusätzlich zu dem Primärsensor (PS) einen Laserentfernungssensor umfasst.

8. Verfahren nach einem der vorstehenden Ansprüche, wobei der Sekundärsensor (SS) die Entfernung misst, die durch ein Rad des fahrerlosen Transportfahrzeugs (ARM) zurückgelegt wird.

9. Verfahren nach einem der vorstehenden Ansprüche, wobei das fahrerlose Transportfahrzeug (AGV) zwei Sekundärsensoren (SS) einschließt.

10. Verfahren nach einem der vorstehenden Ansprüche, wobei die Entfernung, die durch das fahrerlose Transportfahrzeug (AGV) zurückgelegt wird, außerdem durch einen Tertiärsensor (TS) gemessen wird.

11. Verfahren nach einem der vorstehenden Ansprüche, wobei das Verfahren außerdem den Schritt eines Anhaltens des fahrerlosen Transportfahrzeugs (AGV) umfasst, falls sich die direkte Entfernung (DD) nicht ändert, während sich die gemessene Entfernung ändert.

12. Verfahren nach einem der vorstehenden Ansprüche, wobei das Verfahren außerdem den Schritt eines Anpassens eines oder mehrerer Steuerparameter des fahrerlosen Transportfahrzeugs (AGV) umfasst, falls sich die direkte Entfernung (DD) nicht ändert, während sich die gemessene Entfernung ändert.

13. Verfahren nach einem der Ansprüche 1 bis 12 und Anspruch 14, das in einer Vorrichtung nach Anspruch 15 implementiert wird.

14. Verfahren zum Steuern eines fahrerlosen Transportfahrzeugs (AGV) nach einem der vorstehenden Ansprüche in einem normalen Betriebsmodus, gefolgt von einem Objekthandhabungsmodus, auf den der normale Betriebsmodus folgt, wobei das fahrerlose Transportfahrzeug (AGV) eine Gabel (FO), einen Primärsensor (PS), einen Frontsensor (FS), einen Sekundärsensor (SS), einen Datenspeicher (DAS) und eine Steuereinrichtung (CO) umfasst, die die Bewegung des fahrerlosen Transportfahrzeugs (AGV) steuert, wobei das Verfahren die Schritte umfasst:
• während eines ersten Zeitraums, Steuern der Bewegung des fahrerlosen Transportfahrzeugs (AGV) in dem normalen Betriebsmodus, wobei der normale Betriebsmodus das Navigieren des fahrerlosen Transportfahrzeugs (AGV) basierend auf mindestens einer digitalen Darstellung des Bereichs, in dem sich das fahrerlose Transportfahrzeug (AGV) bewegen soll, und einer Eingabe von dem Frontsensor (FS) einschließt,
• während eines zweiten Zeitraums, der kürzer als der erste Zeitraum ist, Steuern der Bewegung des fahrerlosen Transportfahrzeugs (ARM) in dem Objekthandhabungsbetriebsmodus, wobei der Objekthandhabungsbetriebsmodus das Navigieren des fahrerlosen Transportfahrzeugs (AGV) basierend auf mindestens der Eingabe von dem Primärsensor (PS) und der Eingabe von dem Sekundärsensor (SS) einschließt,
• während eines dritten Zeitraums, der länger als der zweite Zeitraum ist, Steuern der Bewegung des fahrerlosen Transportfahrzeugs (ARM) in dem normalen Betriebsmodus, wobei der normale Betriebsmodus das Navigieren des fahrerlosen Transportfahrzeugs (AGV) basierend auf mindestens einer digitalen Darstellung des Bereichs, in dem sich das fahrerlose Transportfahrzeug (AGV) bewegen soll, und der Eingabe von dem Frontsensor einschließt.

15. Fahrerloses Transportfahrzeug (AGV), das eine Gabel (FO), einen Primärsensor (PS), einen Sekundärsensor (SS) und eine Steuereinrichtung (CO) umfasst, die die Bewegung des fahrerlosen Transportfahrzeugs (AGV) in einem normalen Betriebsmodus und in einem Objekthandhabungsbetriebsmodus nach dem in einem der vorstehenden Ansprüche angegebenen Verfahren steuert,
wobei das fahrerlose Transportfahrzeug **dadurch gekennzeichnet ist, dass,** wenn es in dem Objekthandhabungsmodus betrieben wird,
• der Primärsensor (PS) zum Feststellen einer Änderung der Entfernung zwischen dem fahrerlosen Transportfahrzeug (AGV) in einem Zeitraum zwischen zwei Zeitpunkten konfiguriert ist,
• der Sekundärsensor (SS) zum Messen einer Darstellung der Entfernung konfiguriert ist, die durch das fahrerlose Transportfahrzeug (AGV) während des Zeitraums zurückgelegt wird,
• die Steuereinrichtung (CO) zum Vergleichen der festgestellten Änderung der Entfernung mit der gemessenen Entfernung konfiguriert ist und basierend auf einem Vergleichsergebnis bestimmt, ob die Korrektur des Bewegungsablaufs des fahrerlosen Transportfahrzeugs (AGV) erforderlich ist, und
wobei die Steuereinrichtung (CO) zum Steuern der Bewegung des fahrerlosen Transportfahrzeugs in dem Objekthandhabungsbetriebsmodus (AGV) gemäß dem Vergleichsergebnis konfiguriert ist.

## Revendications

1. Procédé de surveillance de la navigation d'un véhicule à guidage automatique (AGV) dans un mode de fonctionnement de manipulation des objets, ledit véhicule à guidage automatique (AGV) comprend une fourche (FO), un capteur primaire (PS), un capteur secondaire (SS) et un dispositif de commande (CO) commandant le mouvement dudit véhicule à guidage automatique (AGV), le procédé comprend les étapes consistant à :
• surveiller le mouvement dudit véhicule à guidage automatique (AGV) fonctionnant en mode normal entre une première position (1PO) et une seconde position (2PO),
• surveiller le mouvement dudit véhicule à guidage automatique (AGV) fonctionnant dans ledit mode de manipulation des objets entre ladite seconde position (2PO) et une position cible (TP),
dans lequel le procédé est **caractérisé en ce que** ladite surveillance dans le mode de manipulation des objets comporte :
• l'établissement d'une variation de distance entre ledit véhicule à guidage automatique (AGV) et ledit objet (OB) dans une période de temps entre deux points dans le temps, en fonction des mesures de distance obtenues par ledit capteur primaire (PS),
• la mesure d'une représentation de la distance parcourue par ledit véhicule à guidage automatique (AGV) pendant ladite période de temps par ledit capteur secondaire (SS),
• la comparaison de ladite variation de distance établie et ladite représentation mesurée de la distance et, en fonction du résultat de la comparaison, déterminer si une correction du mouvement dudit véhicule à guidage automatique (AGV) est nécessaire.

2. Procédé selon la revendication 1, dans lequel ledit mode de manipulation des objets comprend un mode d'opération d'amarrage et/ou un mode d'opération de désamarrage.

3. Procédé selon l'une quelconque des revendications précédentes, dans lequel la correction du mouvement dudit véhicule à guidage automatique (AGV) est requise si ledit résultat de la comparaison est une différence entre la variation de distance établie et la représentation mesurée de la distance parcourue supérieure à une valeur seuil maximale.

4. Procédé selon l'une quelconque des revendications précédentes, dans lequel la commande dudit véhicule à guidage automatique (AGV) pendant ledit mode de manipulation des objets est contrôlée en fonction d'une première valeur seuil et d'une seconde valeur seuil.

5. Procédé selon l'une quelconque des revendications précédentes, dans lequel ladite variation de distance est établie en fonction de mesures directes de la distance (DD) entre ledit capteur primaire (PS) et ledit objet OB.

6. Procédé selon l'une quelconque des revendications précédentes, dans lequel ledit capteur Lidar à balayage mesure en outre une première distance d'angle (1CD) et une seconde distance d'angle (2CD) dudit objet (OB) situé à ladite position cible (TP).

7. Procédé selon l'une quelconque des revendications précédentes, dans lequel ledit véhicule à guidage automatique (AGV) comprend, outre ledit capteur primaire (PS), un capteur de distance laser.

8. Procédé selon l'une quelconque des revendications précédentes, dans lequel ledit capteur secondaire (SS) mesure la distance parcourue par une roue dudit véhicule à guidage automatique (ARM).

9. Procédé selon l'une quelconque des revendications précédentes, dans lequel ledit véhicule à guidage automatique (AGV) comporte deux capteurs secondaires (SS).

10. Procédé selon l'une quelconque des revendications précédentes, dans lequel la distance parcourue par ledit véhicule à guidage automatique (AGV) est en outre mesurée par un capteur tertiaire (TS).

11. Procédé selon l'une quelconque des revendications précédentes, dans lequel ledit procédé comprend en outre l'étape consistant à arrêter ledit véhicule à guidage automatique (AGV) si ladite distance directe (DD) ne varie pas alors que ladite distance mesurée varie.

12. Procédé selon l'une quelconque des revendications précédentes, dans lequel ledit procédé comprend en outre l'étape consistant à ajuster un ou plusieurs paramètres de commande dudit véhicule à guidage automatique (AGV) si ladite distance directe (DD) ne varie pas alors que ladite distance mesurée varie.

13. Procédé selon l'une quelconque des revendications 1 à 12 et la revendication 14, mis en œuvre dans un appareil selon la revendication 15.

14. Procédé de commande d'un véhicule à guidage automatique (AGV) selon l'une quelconque des revendications précédentes, dans un mode de fonctionnement normal suivi d'un mode de fonctionnement de traitement des objets qui est suivi dudit mode de fonctionnement normal, ledit véhicule à guidage automatique (AGV) comprend une fourche (FO), un capteur primaire (PS), un capteur avant (FS), un capteur secondaire (SS), un stockage de données (DAS) et un dispositif de commande (CO) contrôlant le mouvement dudit véhicule à guidage automatique (AGV), dans lequel ledit procédé comprend les étapes consistant à :
• au cours d'une première période, commander le mouvement dudit véhicule à guidage automatique (AGV) dans ledit mode de fonctionnement normal, dans lequel ledit mode de fonctionnement normal comporte la navigation dudit véhicule à guidage automatique (AGV) en fonction d'au moins une représentation numérique de la zone dans laquelle ledit véhicule à guidage automatique (AGV) doit se déplacer et d'une entrée provenant dudit capteur avant (FS),
• au cours d'une deuxième période, plus courte que la première, commander le mouvement du véhicule à guidage automatique (ARM) dans ledit mode d'opération de traitement des objets, dans lequel ledit mode d'opération de traitement des objets comporte la navigation dudit véhicule à guidage automatique (AGV) en fonction d'au moins les données fournies par ledit capteur primaire (PS) et les données fournies par le capteur secondaire (SS),
• au cours d'une troisième période, plus longue que la deuxième, commander le mouvement dudit véhicule à guidage automatique (AGV) dans ledit mode de fonctionnement normal, dans lequel ledit mode de fonctionnement normal comporte la navigation dudit véhicule à guidage automatique (AGV) en fonction d'au moins une représentation numérique de la zone dans laquelle ledit véhicule à guidage automatique (AGV) doit se déplacer et d'une entrée provenant dudit capteur avant.

15. Véhicule à guidage automatique (AGV) comprenant une fourche (FO), un capteur primaire (PS), un capteur secondaire (SS) et un dispositif de commande (CO) contrôlant le mouvement dudit véhicule à guidage automatique (AGV) dans un mode de fonctionnement normal et dans un mode de fonctionnement de traitement des objets selon le procédé spécifié dans l'une quelconque des revendications précédentes,
dans lequel le véhicule à guidage automatique est **caractérisé en ce qu'**il fonctionne en mode de traitement des objets,
• ledit capteur primaire (PS) est configuré pour établir une variation de distance entre ledit véhicule à guidage automatique (AGV) dans une période de temps entre deux points dans le temps,
• ledit capteur secondaire (SS) est configuré pour mesurer une représentation de la distance parcourue par ledit véhicule à guidage automatique (AGV) pendant ladite période de temps,
• ledit dispositif de commande (CO) est configuré pour comparer ladite variation de distance établie et ladite distance mesurée et, en fonction d'un résultat de comparaison, détermine si une correction du mouvement dudit véhicule à guidage automatique (AGV) est nécessaire, et
dans lequel ledit dispositif de commande (CO) est configuré pour commander le mouvement dudit véhicule à guidage automatique dans ledit mode de fonctionnement de traitement des objets (AGV) en fonction dudit résultat de comparaison.
